# EUROPEAN PATENT SPECIFICATION

(11) **EP 4 051 552 B1**
(45) Date of publication and mention of the grant of the patent: **06.12.2023**
(21) Application number: 20793732.7
(22) Date of filing: 28.10.2020
(51) Int. Cl.: B61L 1/16

(54) **PRECISE PLACEMENT OF A SENSOR DEVICE ON A RAIL TRACK**
PRÄZISE PLATZIERUNG EINER SENSORVORRICHTUNG AN EINER SCHIENE
PLACEMENT PRÉCIS D'UN DISPOSITIF CAPTEUR SUR UNE VOIE FERRÉE

(30) Priority: 01.11.2019 NL 2024146
(43) Date of publication of application: 07.09.2022
(73) Proprietor: BUILD CONNECTED B.V., 2582 XL The Hague (NL)
(72) Inventor: VAN DER SCHRIECK, Maarten Pim, 2106 EH HEEMSTEDE (NL); HEERES, Reinier Willem, 7495 RB AMBT-DELDEN (NL); KRANENBURG, Wichert Jan, 2582 XL THE HAGUE (NL)
(74) Representative: Arnold & Siedsma
(86) International application number: PCT/EP2020/080260
(87) International publication number: WO 2021/083946

(56) References cited:
- WO-A1-2016/054492
- WO-A1-2019/122193
- DE-B3-102017 103 243
- DE-B3-102017 103 244
- DE-U1- 29 902 156
- US-A1- 2017 015 336

## Description

The present patent disclosure concerns a method of placing a sensor device on a rail track, the sensor device for placement on a rail track, and an assembly comprising the sensor and the rail track.

Sensor devices exist that are placed on a rail track for sensing various properties of the rail track and/or passing trains. Such sensor devices are commonly placed by providing holes in the rail track and attaching the sensor device to the rail track using fasteners such as nuts and bolts.

As described in patent document NL 2023451, filed 5 July 2019 by the same inventors as the present disclosure and unpublished at time of filing of the present disclosure, when placing a sensor device on a rail track, it is an option to use magnets in the sensor device to attach the sensor to the rail track, which is generally made of steel. Sensor devices exist for sensing certain properties of rail vehicle wheels passing by on the rail track.

The document DE 10 2017 103 244 B3 discloses also to attach a train detection device with magnets to the rail track.

Although dimensions of rail tracks differ to some extent, rail tracks in general when viewed in cross section comprise a base portion, a head portion, and a neck portion connecting the base portion and the head portion. The head portion is for receiving the wheels of rail vehicles. The head portion is typically referred to as the "head", the neck portion as the "web" and the base portion as the "foot".

Attaching the sensor device using magnets may result in unwanted movement of the sensor device, which may have unwanted effects on the measurements performed by the sensor. Also, the sensor may be damaged by passing rail vehicles if it is accidentally moved to a position overlapping with an area or volume through which the rail vehicle wheels pass.

Also, due to safety and other regulations, an object such as a sensor that is placed on a rail track in many countries must remain at a minimum distance from the inner rims of the wheels of passing rail vehicles. In the Netherlands, for example, this minimum distance is 45 mm.

It is an object, among objects, of the present patent disclosure to provide an improved sensor that is attached to a rail track magnetically and an improved method of attaching a sensor to a rail track.

According to a first aspect, there is provided a sensor device configured to be placed on a lateral side of a rail track, the sensor device comprising:
- one or more permanent magnets positioned such that the sensor device is mountable on the lateral side of the rail track by magnetic attraction between the magnets and the rail track; and
- a housing comprising a bottom side, a top side opposite the base side, and a mounting side connecting the bottom side and the top side,

wherein the mounting side comprises a first, a second and a third contact edge region configured to be in contact with the lateral side of the rail track, and
wherein the second contact edge region is positioned outwardly from a first plane extending through both the first contact edge region and the third contact edge region, wherein the second contact edge region is further positioned between a second plane extending parallel to the top side and through the first contact edge region and a third plane extending parallel to the second plane and through the third contact edge region.

The above sensor device, when placed onto the rail track, in particular with the second and third contact edge regions onto the neck portion thereof such that the first contact edge region is in contact with the head portion (or the base portion), beneficially has the three contact edge regions in contact with the rail track, resulting in a very stable attachment of the sensor device to the rail track.

In addition, the first contact edge portion is positioned relative to the second and third contact edge portions such that when the device is placed there is only one position on the rail track that the device can take. This results in a well-defined relative position between the sensor device and the rail track. For example, the top side of the sensor device will have a well-defined distance from the top of the head portion of the rail track.

The first contact edge region, which is preferably at the head portion side of the rail, is positioned such that it is in contact with a bottom side of the head portion of the rail track. This beneficially results in the sensor device to remain below a well-defined level compared to the rail track.

The device can thus be precisely placed onto the rail track, without the need of precision measurements or specifically trained technicians for placing the sensor devices.

When viewed in cross section, the first, second and third contact edge regions form a triangular shape. The outward position of the second contact edge region means that compared to the first plane, the second contact edge region is positioned towards the outside of the housing.

The device is configured by making use of the standardized shape of rail tracks. The device is configured to be placed on the neck portion with the second and third contact edge portions. The neck portion in most types of rail tracks has a concave surface of which the radius of curvature decreases towards the head portion.

The sensor device is in particular beneficial when provided with sensors configured to measure a value associated with a magnetic field, such as a magnetic field strength and/or direction or change in the magnetic field strength and/or direction. Using the above sensor device, the sensors can be placed as close as possible (e.g. within limits set by safety standards) to the top of the rail, thereby being as close as possible to a passing (wheel of) a rail vehicle. However, the sensor device can alternatively or additionally comprise other sensors to measure some property of a passing rail vehicle or some property that is influenced by such a passing rail vehicle. The sensor device can therefore be any one or any combination of: a magnetic field sensor, an optical sensor, an electric field sensor, an electric potential sensor, an electric current sensor, an acoustic sensor, a vibration sensor, a position sensor, a thermal sensor, a proximity sensor, a radar sensor, and a chemical sensor. The magnetic field sensor may include a magnetometer (e.g. a MEMS magnetic field sensor), a Hall effect sensors, a magnetic anomaly detector, and/or a magnetoresistance sensor.

It is preferred that the first contact edge portion is at the side of the head portion of the rail track. However, it will be understood that the precise placement can also be achieved when the first contact edge portion is positioned at the side of the base portion of the rail track. In that configuration, the base side of the sensor would then be positioned at the head portion. Alternatively, the base side would then be the top side and the top side would then be the base side.

In an embodiment, when viewed in cross section, the neck portion has a first width, the head portion has a second width and the base portion has a third width, the first width being smaller than both the second width and the third width, wherein preferably the first, second and third widths are respective first, second and third maximum widths, wherein the wherein the housing is configured such that when the second and third contact edge regions are in contact with the neck portion, the first contact edge region is in contact with either the head portion or the base portion. The outer surfaces of the neck portion may have a concave surface profile having a radius of curvature that decreases towards the head portion, wherein side walls of the head portion have a concave surface profile having a radius of curvature that increases in a direction away from the neck portion.

Further embodiments of the sensor device are defined in the dependent claims, the advantages of which will become apparent form the below description of figures.

According to a second aspect, there is provided a method of placing a sensor device according to any one of the preceding claims on a lateral side of a rail track, the method comprising:
- placing the sensor device with either the first and the second contact edge regions or the second and the third contact edge regions in contact with the rail track;
- sliding the sensor device in a sliding direction in order to place the remaining contact edge region in contact with the rail track, wherein during the sliding respectively the first and second or the second and third contact edge regions remain in contact with the lateral side of the rail track.

In an embodiment, the sensor device is placed with the second and third contact edge regions in contact with the lateral side of the rail track; and
the sensor device is slid in a sliding direction at least partially along a normal direction of the top side of the sensor device in order to place the first contact edge region in contact with the rail track, wherein during the sliding the second and third contact edge regions remain in contact with the lateral side of the rail track.

The alternative is to first place the first and second contact edge regions in contact with the rail track, and thereafter sliding the sensor device in a direction such that the third contact edge region moves closer to the neck portion of the rail track until it finally touches the rail track.

This method has the advantage that the sensor device is always placed in the same reproducible position relative to the rail track.

In an embodiment, the rail track in cross section comprises a base portion, a head portion for receiving wheels of rail vehicles, and a neck portion connecting the base portion and the head portion, wherein the second and third contact edge regions are placed in contact with a surface of the neck portion of the rail track.

It is preferred that the sliding direction is towards the head portion such that after sliding the first contact edge region is placed in contact with a base portion facing surface of the head portion.

According to a third aspect, there is provided an assembly or system comprising a sensor device according to the first aspect at least one rail track.

Features, advantages and effects of the various aspects are readily applicable to any of the other aspects, as will be understood, also by a person skilled in the art.

The accompanying drawings are used to illustrate presently preferred non-limiting exemplary embodiments of devices of the present disclosure. The above and other advantages of the features and objects of the disclosure will become more apparent and the aspects and embodiments will be better understood from the following detailed description when read in conjunction with the accompanying drawings, in which:
Fig. 1 is a schematic side view of an embodiment of the sensor device according to the present disclosure positioned on a lateral inner side of a rail track carrying a rail vehicle;
Fig. 2 is a schematic view in perspective of an embodiment of the sensor device according to the present disclosure;
Fig. 3 is a schematic cross section view of an embodiment of the sensor device in a direction opposite to the z-direction indicated in Fig. 2;
Fig. 4 is a schematic cross section view in a longitudinal direction of the rail as indicated in Fig. 1;
Fig. 5 is a schematic cross section view of the sensor device of Fig. 3 being in a position prior to contacting a lateral side of a rail track;
Fig. 6 is a schematic cross section view of the sensor device of Fig. 5 being in a first contacting position with a lateral side of the rail track;
Fig. 7 is a schematic cross section view of the sensor device of Fig. 6 being in a final contacting position with a lateral side of the rail track;
Fig. 8 is a schematic cross section view of another embodiment of the sensor device being in a final contacting position with a lateral side of a rail track; and
Fig. 9 is a schematic cross section view of yet another embodiment of the sensor device being in a final contacting position with a lateral side of a rail track.

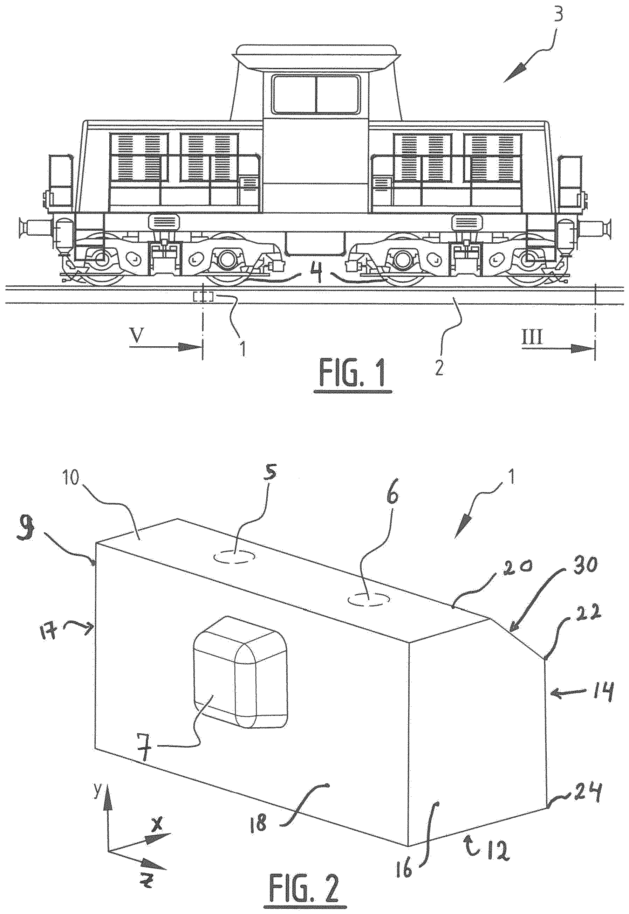

As shown in Fig. 1, a sensor device 1 is placed on an inner lateral side of a rail track 2. Rail vehicle 3, having wheels 4, is passing the sensor device.

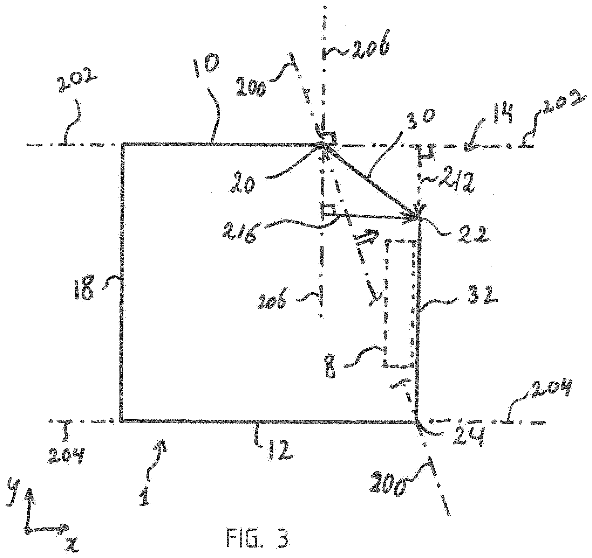

The sensor device 1, as can be seen in Figs. 2 and 3, comprises a housing 9 which includes a base side 12, a top side 10 opposite the base side 12, and a mounting side 14 connecting the base side 12 and the top side 10. Opposite the mounting side 14, the housing comprises an outer side 18, connecting the base side 12 to the top side 10 opposite the mounting side 14. The housing can be a solid body wherein parts such as the magnet 8 and, in the embodiment of Fig. 2, magnets 5 and 6 can be embedded. The body can for instance be made by resin casting. A suitable resin is polyurethane resin. When the body is made of polyurethane, the friction between the first, second and third contact edge portions suitable for magnetic attachment of the device to the lateral side of the rail track.

The mounting side 14 comprises a first 20, a second 22 and a third 23 contact edge region. The sensor device 1 comprises a permanent magnet 8 positioned such that the sensor device 1 is mountable on the lateral side of the rail track by magnetic attraction between the magnets and the rail track. The magnet 8 may extend along a longitudinal direction of the housing 9, viz. along the z-direction indicated in Fig. 2. There may additionally or alternatively be more magnets, such as a magnet positioned in the housing 9 adjacent the first contact edge region 20.

The second contact edge region 22 is positioned outwardly from a first plane 200 extending through both the first contact edge region 20 and the third contact edge region 24. The second contact edge region 22 is further positioned between a second plane 202 extending parallel to the top side 10 and through the first contact edge region 20 and a third plane 204 extending parallel to the second plane 202 and through the third contact edge region 24. In this embodiment of the sensor device 1, the third plane 204 extends parallel to the base side 12.

The housing 9 is configured such that, when the sensor device 1 is placed on the rail track, at most the first 20 , second 22 and third 24 contact edge regions are in contact with the rail track.

In certain variants of the sensor device 1, the mounting side 14 comprises a side portion 32 positioned at a lateral side of the housing 9 and connecting the second contact edge region 22 and the third contact edge region 24, and a slanted surface 30 between the top side 10 and the side surface 32. Herein, the first contact edge region 20 is an edge region between the top side 10 and the slanted surface 30, the second contact edge region 22 is an edge region between the side surface 32 and the slanted surface 30, and the third contact edge region 24 is an edge region between the side surface 32 and the base side 12.

It will be understood that the slanted surface 30 can alternatively be replaced by any other shape, as long as it not in mechanical contact the rail track 2 when the device is in a mounted position.

As shown in Fig. 3, there is a first distance 212 between the second contact edge region 22 and the second plane 202 in a direction normal to the second plane 202. The first distance 212 is preferably in the range of 3 to 40 mm, more preferably 4 to 20 mm. These ranges of the first distance 212 are particularly beneficial for flat-bottom rail tracks.

A fourth plane 206 extends through the first contact edge region 20 and is perpendicular to the second plane 202. A second distance 216 between the second contact edge region 22 and the fourth plane 206 in a direction normal to the fourth plane 206 is shown and is preferably in the range of 8 to 25 mm, more preferably 15 to 20 mm. These ranges of the second distance 216 are also particularly beneficial for flat-bottom rail tracks, resulting in a stable placement of the sensor device 1. The resulting distance of the top surface 10 from the top of the head portion of the rail in this way can be set to anywhere between about 35 mm to about 55 mm.

In one embodiment, the sensor device 1 is configured for sensing wheels of a rail vehicle passing the sensor device. Such a sensor device is described in patent document NL 2023451. Noted in particular are pages 9-16 thereof, which describe a preferred embodiment. As can be seen in Fig. 2, in this embodiment, the sensor device 1 comprises a magnetic field sensor unit 7 for sensing a magnetic field influence of a passing wheel 4. In addition, the device comprises magnets 5 and 6, which provide a magnetic field around the device. When a wheel of a train passes the device of Fig. 2, the magnetic field senses by the sensor in sensor unit 7 will change, and is recorded to detect wheels and/or detect a direction of motion of the wheels 4 of the rail vehicle 3.

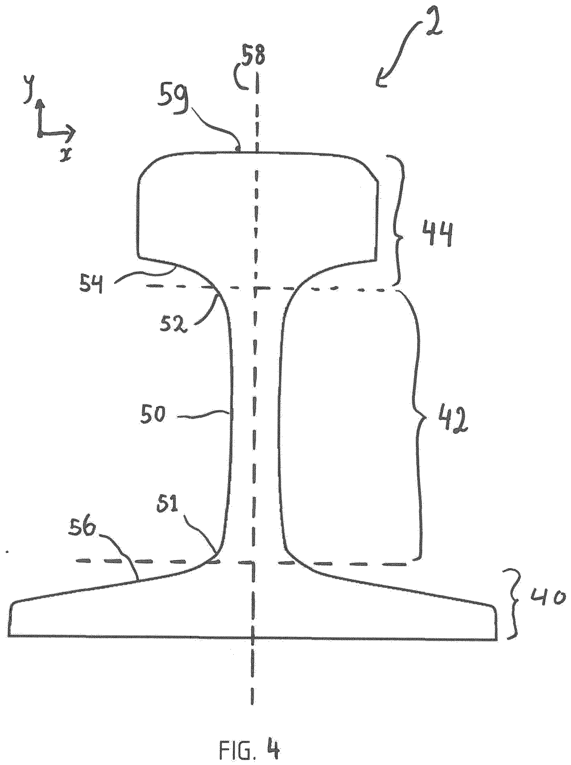

A flat-bottomed rail track 2 is shown in Fig. 4. It is noted that the sensor devices described herein are applicable to bullhead type rail tracks as well. The rail track 2 can be a 54E1 type rail track. The rail track can alternatively be 54E2 rail track and/or manufactured according to European Standard EN 13674-1 or 13674-4.

The rail track 2 in cross section comprises a base portion 40, a head portion 44 for receiving wheels of rail vehicles, and a neck portion 42 connecting the base portion 40 and the head portion 44. The head portion 44 broadens from a neck portion side thereof in a direction away from the base portion 40 thereby defining a base portion facing surface 54 of the head portion 44 adjacent to the neck portion 50. A first intermediate part 52 between the neck portion and the head portion 54 has a smallest radius of curvature relative to the radius of curvature of the neck portion 50.

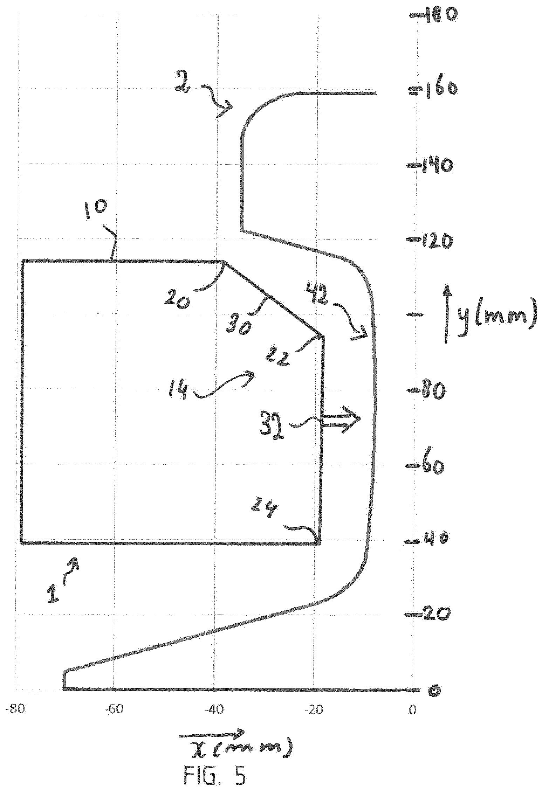

Similar to the head portion 44, the base portion 40 broadens from a neck portion 42 side thereof in a direction away from the head portion 44, thereby defining a head portion facing surface 56 of the base portion 40. A second intermediate part 51 between the base portion 40 and the head portion 54 has a smallest radius of curvature relative to the radius of curvature of the neck portion 50. The rail track 2 has a symmetry plane 58. In Figs. 5-9, only one side of the rail is shown.

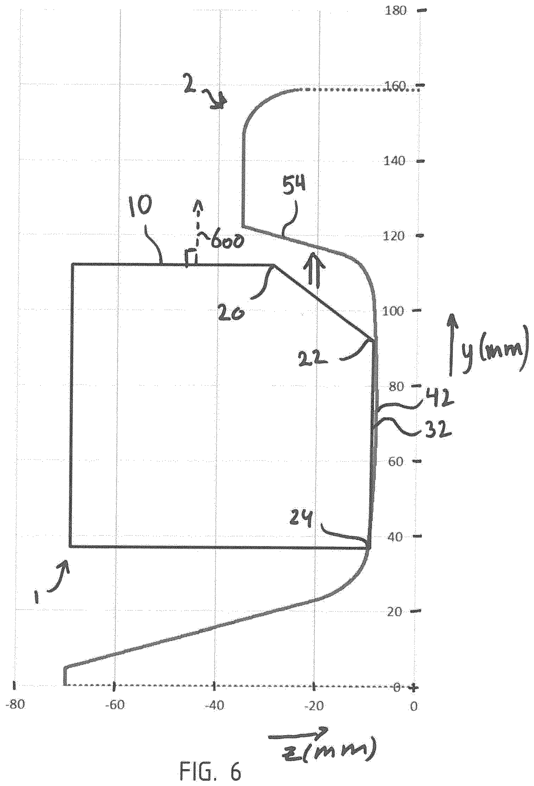

Figs. 5-7 depict a method of placing the sensor device 1 on the lateral side of a rail track 2. The method comprises placing the sensor device 1 with the second 22 and third 24 contact edge regions in contact with the lateral side of the rail track 2. To achieve this, the sensor device 1 can be moved toward the neck portion 42 as shown in Fig. 5, wherein the movement direction is indicated with the double lined arrow. A position as shown in Fig. 6 is then achieved. Here the second 22 and third 24 contact edge regions are placed on the neck portion 42 of the rail track 2. Many rail track profiles, including the 54E1 and 54E2 type profiles, have neck portions that have concave surfaces. Therefore, even though the surface between the second 22 and third 24 contact edge regions can be flat, only the second and third contact edge regions will be in contact with the neck portion 42 when it is placed in a position as shown in Fig. 6.

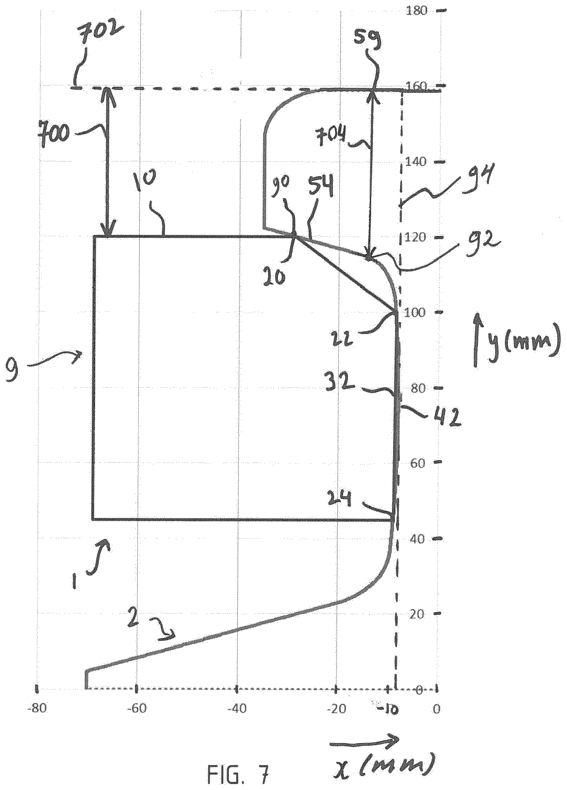

Once the device is placed, the device 1 is slid in a sliding direction at least partially along a normal direction 600 of the top side 10 of the sensor device1 in order to place the first contact edge region 20 in contact with the rail track, in particular with the base portion facing surface 54. During the sliding the second 22 and third 24 contact edge regions remain in contact with the neck portion 42 of the rail track. Then the position of the device 1 shown in Fig. 7 is reached. In this way, one defined position of the device 1 relative to the rail track 2 is achieved. Since there are three points/regions in contact with the rail track 2, the position of the device 1 is furthermore stable.

The alternative is to first place the first and second contact edge regions in contact with the rail track. The first contact edge region would then be in contact with the surface 54. Thereafter the sensor device can be slid in a direction such that the third contact edge region moves closer to the neck portion of the rail track until it finally touches the rail track.

The second and third contact edge regions are configured to be in contact with the lateral side of the rail track at the neck portion thereof, and wherein the first contact edge region is configured to be in contact with the lateral side of the rail track at the head portion thereof.

As can be seen from Fig. 7, the relative positions of the first 20, second 22, and third 24 contact edge regions can be altered to a certain extent. What is beneficial is that compared to the first contact edge region 20, the second contact edge region 22 is moved outwards, and the first contact edge region 20 is moved upwards so that it contacts the surface 54 while the second 22 and third 24 contact edge regions are in contact with the neck portion 42 of the rail track 2.

In other words, the housing 9 is configured such that the first contact edge region 20 is in contact with the base portion facing surface 54 when the second 22 and third 24 edge regions are in contact with the neck portion.

By choosing the position of the first contact edge region 20 relative to the second contact edge region 22, the top surface 10 will have a certain distance 700 from the top 59 of the rail track 2, indicated with a tangent 702. In the configuration of Fig. 7, the first contact edge region 20 when placed on the rail track has a position 90 on the surface 54. Another configuration could be that the first contact edge region is at position 92, resulting in a distance 704 from the top 59 of the rail track 2. The distance 704 is somewhat larger than the distance 700. Distance 700 is approximately 39 mm, while the distance 704 is approximately 45 mm.

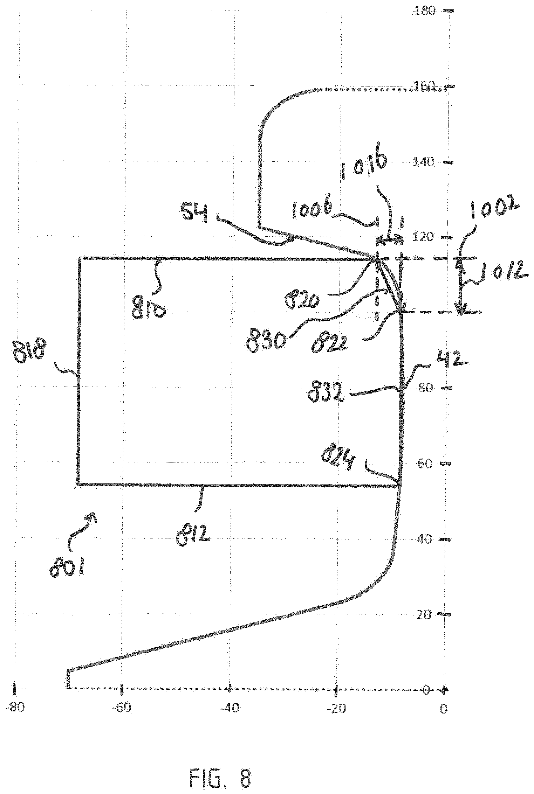

Fig. 8 shows a sensor device 801 according to another embodiment, having a base side 812, a top side 810, an outer side 818, a mounting side surface 832 and a slanted surface 830. The first contact edge portion 820 is now in contact with the base portion facing surface 54 at a position closer to the neck portion 42. The second contact edge portion 822 is positioned in an outward position as in the sensor device 1, but less so. This can be seen by the relatively short first distance 1012 and second distance 1016, which are defined in a way corresponding to the first distance 212 and the second distance 216 of the sensor device 1.

In addition, a distance between the third contact edge portion 824 and the second contact edge portion 822 is less than in the sensor device 1.

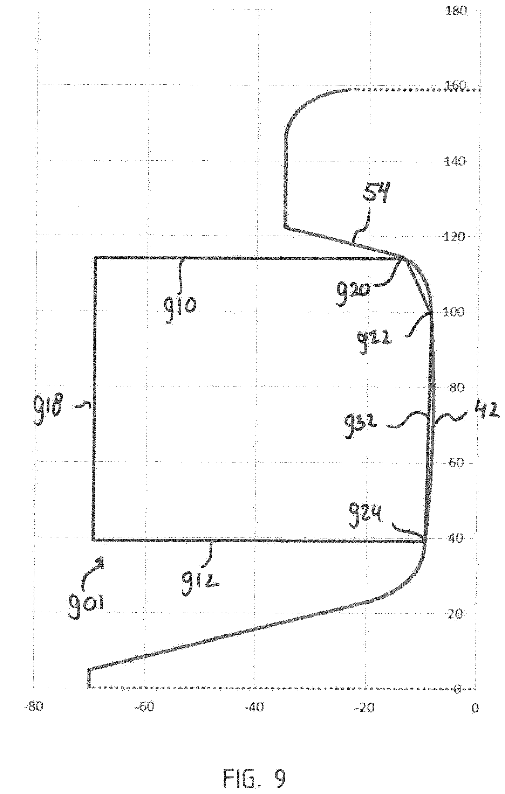

Fig. 9 shows a sensor device 901 according to another embodiment, having a base side 912, a top side 910, an outer side 918, a mounting side surface 932 and a slanted surface 930. The first contact edge portion 920 is in contact with the base portion facing surface 54 at a position similar to first contact edge portion 8f20 of Fig. 8. The second contact edge portion 922 is positioned in an outward position as in the sensor device 801. The difference between sensor device 801 and 901 is that the third contacting edge region 924 has a distance from the second contact edge region 922 that is larger than the distance between the second 822 and third 824 contact edge regions of sensor device 801 of Fig. 8. The sensor device in general is placed most stable and reproducibly when both the second and the third contact edge regions are in contact with the neck portion 42. The dimensions of the sensor device can differ based on the needs of the specific device.

Herein, examples of the sensor device are shown for rail tracks having a concave neck portion. Rail tracks exist with a flat neck portion. For those types of rail, the second and third contact edge regions can be made to extend from the housing 9, and/or the side surface 32 can be made concave such that it does not interfere with the placement of the device.

The use of magnets, such as the magnet 8, for mounting the sensor device has an additional advantage in particular for sensor devices for measuring magnetic fields. The mounting magnet cause the suppression of magnetic fields induced in the rail by rail vehicles passing the rail near the device. The additional magnet(s) apply a magnetic field to the rail, due to which the device can more accurately measure the effect of the wheel onto the magnetic field measured by the magnetic field sensor. Without this magnetic field of the mounting magnet(s) such as magnet 8 applied to the rail, when a train or other typically heavy rail vehicle passes by, a magnetic field is induced by the force introduced onto the rail. This effect is known as the Villari effect or the inverse magnetostrictive effect. This effect can be described as the change of the magnetic susceptibility of a material when subjected to a mechanical stress. More generally, with the mounting magnet, the effect of the force exerted by the vehicle is at least reduced or even eliminated, since most, if not all, of the magnetic domains in the rail will substantially align with the magnetic field induced by the additional magnets.

Whilst the principles of the described methods and devices have been set out above in connection with specific embodiments, it is to be understood that this description is merely made by way of example and not as a limitation of the scope of protection which is determined by the appended claims.

## Claims

1. Sensor device (1) configured to be placed on a lateral side of a rail track (2), the sensor device comprising:
- one or more permanent magnets (8) positioned such that the sensor device (1) is mountable on the lateral side of the rail track (2) by magnetic attraction between the magnets (8) and the rail track (2); and
- a housing (9) comprising a base side (12), a top side (10) opposite the base side, and a mounting side (14) connecting the base side and the top side,
**characterized in that** the mounting side (14) comprises a first (20), a second (22) and a third (24) contact edge region configured to be in contact with the lateral side of the rail track (2), and
wherein the second contact edge region (22) is positioned outwardly from a first plane (200) extending through both the first contact edge region (20) and the third contact edge region (24), wherein the second contact edge region (22) is further positioned between a second plane (202) extending parallel to the top side (10) and through the first contact edge region (20) and a third plane (204) extending parallel to the second plane (202) and through the third contact edge region (24).

2. Sensor device according to claim 1, wherein the housing is configured such that, when the sensor device is placed on the rail track, at most the first, second and third contact edge regions are in contact with the rail track.

3. Sensor device according to any one of the preceding claims, wherein the sensor device if configured for sensing wheels of a rail vehicle passing the sensor device, wherein preferably the sensor device comprises a magnetic field sensor for sensing a magnetic field influence of the passing wheel.

4. Sensor device according to any one of the preceding claims, wherein the first contact edge region is adjacent to the top side.

5. Sensor device according to claim 4, wherein the mounting side comprises a side portion positioned at a lateral side of the housing and connecting the second contact edge region and the third contact edge region, and a slanted portion between the top side and the side portion, wherein the first contact edge region is an edge region between the top side and the slanted portion, the second contact edge region is an edge region between the side portion and the slanted portion, and the third contact edge region is an edge region between the side portion and the base side.

6. Sensor device according to any one of the preceding claims, wherein the rail track in cross section comprises a base portion, a head portion for receiving wheels of rail vehicles, and a neck portion connecting the base portion and the head portion,
wherein the second and third contact edge regions are configured to be in contact with the lateral side of the rail track at the neck portion thereof, and wherein the first contact edge region is configured to be in contact with the lateral side of the rail track at the head portion thereof.

7. Sensor device according to claim 6, wherein the head portion broadens from the neck portion in a direction away from the base portion thereby defining a base portion facing surface of the head portion adjacent to the neck portion, wherein the housing is configured such that the first contact edge region is in contact with the base portion facing surface when the second and third edge regions are in contact with the neck portion of the rail track.

8. Sensor device according to any one of the preceding claims, wherein a first distance between the second contact edge region and the second plane in a direction normal to the second plane is in the range of 3 to 40 mm, preferably 4 to 20 mm.

9. Sensor device according to any one of the preceding claims, wherein a fourth plane extends through the first contact edge region and is perpendicular to the second plane, wherein a second distance between the second contact edge region and the fourth plane in a direction normal to the fourth plane is in the range of 8 to 25 mm, preferably 15 to 20 mm,

10. Sensor device according to any one of the preceding claims, wherein the first, second and third contact edge regions are positioned substantially along a curve following a cross section surface profile of the rail track, wherein preferably the rail track is a flat-bottomed rail track, wherein more preferably the rail track is a 54E1 rail profile, a 54E2 rail profile and/or manufactured according to European Standard EN 13674-1 or 13674-4,

11. Sensor device according to any one of the preceding claims, wherein the first, second and third contact edge regions extend along the mounting side such that, when the device is placed on the rail track, the first, second and third contact edge regions extend in a longitudinal direction of the rail track.

12. Method of placing a sensor device according to any one of the preceding claims on a lateral side of a rail track, the method comprising:
- placing the sensor device with either the first and the second contact edge regions or the second and the third contact edge regions in contact with the rail track;
- sliding the sensor device in a sliding direction in order to place the remaining contact edge region in contact with the rail track, wherein during the sliding respectively the first and second or the second and third contact edge regions remain in contact with the lateral side of the rail track.

13. Method according to claim 12, wherein the sensor device is placed with the second and third contact edge regions in contact with the lateral side of the rail track; and
wherein the sensor device is slid in a sliding direction at least partially along a normal direction of the top side of the sensor device in order to place the first contact edge region in contact with the rail track, wherein during the sliding the second and third contact edge regions remain in contact with the lateral side of the rail track.

14. Method according to claim 12 or 13, wherein the rail track in cross section comprises a base portion, a head portion for receiving wheels of rail vehicles, and a neck portion connecting the base portion and the head portion, wherein the second and third contact edge regions are placed in contact with a surface of the neck portion of the rail track, wherein the sliding direction is preferably towards the head portion such that after sliding the first contact edge region is placed in contact with a base portion facing surface of the head portion.

15. Assembly comprising a sensor device according to any one of claims 1-11 and at least one rail track.

## Patentansprüche

1. Sensorvorrichtung (1), ausgebildet, um an einer Seite eines Schienenstrangs (2) angebracht zu werden, wobei die Sensorvorrichtung aufweist:
- einen oder mehrere Permanentmagnete (8), die so angeordnet sind, dass die Sensorvorrichtung (1) durch magnetische Anziehung zwischen den Magneten (8) und dem Schienenstrang (2) an der Seite des Schienenstrangs (2) angebracht werden kann; und
- ein Gehäuse (9) mit einer Bodenseite (12), einer der Bodenseite gegenüberliegenden Oberseite (10) und einer die Bodenseite und die Oberseite verbindenden Montageseite (14),
**dadurch gekennzeichnet, dass** die Montageseite (14) einen ersten (20), einen zweiten (22) und einen dritten (24) Kontaktkantenbereich aufweist,
ausgebildet, um mit der lateralen Seite des Schienenstrangs (2) in Kontakt zu stehen, und wobei der zweite Kontaktkantenbereich (22) außerhalb einer ersten Ebene (200) positioniert ist, die sich sowohl durch den ersten Kontaktkantenbereich (20) als auch durch den dritten Kontaktkantenbereich (24) erstreckt, wobei der zweite Kontaktkantenbereich (22) ferner zwischen einer zweiten, sich parallel zu der Oberseite (10) und durch den ersten Kontaktkantenbereich (20) erstreckenden Ebene (202) und einer dritten, sich parallel zu der zweiten Ebene (202) und durch den dritten Kontaktkantenbereich (24) erstreckenden Ebene (204) positioniert ist.

2. Sensorvorrichtung nach Anspruch 1, wobei das Gehäuse so ausgebildet ist, dass beim Anbringen der Sensorvorrichtung an den Schienenstrang höchstens der erste, zweite und dritte Kontaktkantenbereich mit dem Schienenstrang in Kontakt steht.

3. Sensorvorrichtung nach einem der vorherigen Ansprüche, wobei die Sensorvorrichtung zum Erfassen von Rädern eines an der Sensorvorrichtung vorbeifahrenden Schienenfahrzeugs ausgebildet ist, wobei die Sensorvorrichtung vorzugsweise einen Magnetfeldsensor aufweist, zum Erfassen einer Magnetfeldbeeinflussung des vorbeifahrenden Rades.

4. Sensorvorrichtung nach einem der vorherigen Ansprüche, wobei der erste Kontaktkantenbereich an die Oberseite angrenzt.

5. Sensorvorrichtung nach Anspruch 4, wobei die Montageseite einen Seitenabschnitt aufweist, der an einer lateralen Seite des Gehäuses positioniert ist und den zweiten Kontaktkantenbereich und den dritten Kontaktkantenbereich verbindet, sowie einen abgeschrägten Abschnitt zwischen der Oberseite und dem Seitenabschnitt, wobei der erste Kontaktkantenbereich einen zwischen der Oberseite und dem abgeschrägten Abschnitt befindlichen Kantenbereich darstellt, der zweite Kontaktkantenbereich einen zwischen dem Seitenabschnitt und dem abgeschrägten Abschnitt befindlichen Kantenbereich darstellt, und der dritte Kontaktkantenbereich einen zwischen dem Seitenabschnitt und der Bodenseite befindlichen Kantenbereich darstellt.

6. Sensorvorrichtung nach einem der vorherigen Ansprüche, wobei der Schienenstrang im Querschnitt einen Basisabschnitt, einen Kopfabschnitt zur Aufnahme von Rädern von Schienenfahrzeugen sowie einen den Basisabschnitt und den Kopfabschnitt verbindenden Halsabschnitt aufweist, wobei der zweite und der dritte Kontaktkantenbereich so ausgebildet sind, dass sie mit der lateralen Seite des Schienenstrangs an dessen Halsabschnitt in Kontakt stehen, und wobei der erste Kontaktkantenbereich so ausgebildet ist, dass er mit der lateralen Seite des Schienenstrangs an dessen Kopfabschnitt in Kontakt steht.

7. Sensorvorrichtung nach Anspruch 6, wobei sich der Kopfabschnitt vom Halsabschnitt in einer vom Basisabschnitt weg weisenden Richtung verbreitert, wodurch eine dem Basisabschnitt zugewandte, an den Halsabschnitt angrenzende Oberfläche des Kopfabschnitts definiert wird, wobei das Gehäuse so ausgebildet ist, dass der erste Kontaktkantenbereich mit der dem Basisabschnitt zugewandten Oberfläche in Kontakt steht, wenn der zweite und der dritte Kantenbereich mit dem Halsabschnitt des Schienenstrangs in Kontakt steht.

8. Sensorvorrichtung nach einem der vorherigen Ansprüche, wobei in einer zur zweiten Ebene senkrechten Richtung ein erster Abstand zwischen dem zweiten Kontaktkantenbereich und der zweiten Ebene im Bereich von 3 bis 40 mm, vorzugsweise 4 bis 20 mm, liegt.

9. Sensorvorrichtung nach einem der vorherigen Ansprüche, wobei sich durch den ersten Kontaktkantenbereich eine senkrecht zur zweiten Ebene stehende vierte Ebene erstreckt, und wobei zwischen dem zweiten Kontaktkantenbereich und der vierten Ebene in einer zu der vierten Ebene senkrechten Richtung ein zweiter Abstand im Bereich von 8 bis 25 mm, vorzugsweise 15 bis 20 mm, liegt.

10. Sensorvorrichtung nach einem der vorherigen Ansprüche, wobei der erste, zweite und dritte Kontaktkantenbereich im Wesentlichen entlang einer einem Querschnittsflächenprofil des Schienenstrangs folgenden Kurve angeordnet sind, wobei der Schienenstrang vorzugsweise einen Flachboden-Schienenstrang darstellt, wobei der Schienenstrang noch bevorzugter ein 54E1-Schienenprofil, ein 54E2-Schienenprofil aufweist und/oder gemäß der Europäischen Norm EN 13674-1 oder 13674-4 hergestellt ist.

11. Sensorvorrichtung nach einem der vorherigen Ansprüche, wobei sich der erste, zweite und dritte Kontaktkantenbereich entlang der Montageseite derart erstrecken, dass sich, wenn die Vorrichtung an den Schienenstrang angebracht wird, der erste, zweite und dritte Kontaktkantenbereich in Längsrichtung des Schienenstrangs erstrecken.

12. Verfahren zum seitlichen Anbringen einer Sensorvorrichtung nach einem der vorherigen Ansprüche an einen Schienenstrang, aufweisend die folgenden Schritte:
- Anbringen der Sensorvorrichtung so, dass entweder der erste und der zweite Kontaktkantenbereich oder der zweite und der dritte Kontaktkantenbereich in Kontakt mit dem Schienenstrang stehen;
- Verschieben der Sensorvorrichtung in einer Verschieberichtung, um den verbleibenden Kontaktkantenbereich in Kontakt mit dem Schienenstrang zu bringen, wobei jeweils der erste und der zweite oder der zweite und der dritte Kontaktkantenbereich während des Verschiebens in Kontakt mit der lateralen Seite des Schienenstrangs bleiben.

13. Verfahren nach Anspruch 12, wobei die Sensorvorrichtung so angebracht wird, dass der zweite und dritte Kontaktkantenbereich mit der lateralen Seite des Schienenstrangs in Kontakt steht; und
wobei die Sensorvorrichtung in einer Verschieberichtung zumindest teilweise entlang einer zur Oberseite der Sensorvorrichtung senkrechten Richtung verschoben wird, um den ersten Kontaktkantenbereich mit dem Schienenstrang in Kontakt zu bringen, wobei während des Verschiebens der zweite und der dritte Kontaktkantenbereich mit der lateralen Seite des Schienenstrangs in Kontakt bleiben.

14. Verfahren nach Anspruch 12 oder 13, wobei der Schienenstrang im Querschnitt einen Basisabschnitt, einen Kopfabschnitt zur Aufnahme von Rädern von Schienenfahrzeugen und einen den Basisabschnitt und den Kopfabschnitt verbindenden Halsabschnitt aufweist, wobei der zweite und der dritte Kontaktkantenbereich mit einer Oberfläche des Halsabschnitts des Schienenstrangs in Kontakt gebracht werden, wobei die Verschieberichtung vorzugsweise in Richtung des Kopfabschnitts verläuft, so dass der erste Kontaktkantenbereich nach dem Verschieben mit einer dem Basisabschnitt zugewandten Oberfläche des Kopfabschnitts in Kontakt gebracht wird.

15. Baugruppe mit einer Sensorvorrichtung nach einem der Ansprüche 1 bis 11 und zumindest einem Schienenstrang.

## Revendications

1. Dispositif de détection (1) configuré de manière à être placé sur une face latérale d'une voie ferrée (2), le dispositif de détection comprenant :
un ou plusieurs aimants permanents (8) positionnés de telle sorte que le dispositif de détection (1) peut être monté sur la face latérale de la voie ferrée (2) par attraction magnétique entre les aimants (8) et la voie ferrée (2) ; et
un logement (9) comprenant une face de base (12), une face supérieure (10) opposée à la face de base et une face de montage (14) reliant la face de base et la face supérieure,
**caractérisé en ce que** la face de montage (14) comprend une première (20), une deuxième (22) et une troisième (24) zones de bord de contact configurées de manière à être en contact avec la face latérale de la voie ferrée (2), et
dans lequel la deuxième zone de bord de contact (22) est positionnée vers l'extérieur à partir d'un premier plan (200) s'étendant à la fois à travers la première zone de bord de contact (20) et la troisième zone de bord de contact (24), dans lequel la deuxième zone de bord de contact (22) est, en outre, positionnée entre un deuxième plan (202) s'étendant parallèlement à la face supérieure (10) et à travers la première zone de bord de contact (20) et un troisième plan (204) s'étendant parallèlement au deuxième plan (202) et à travers la troisième zone de bord de contact (24).

2. Dispositif de détection selon la revendication 1, dans lequel le logement est configuré de telle sorte que, lorsque le dispositif de détection est placé sur la voie ferrée, au plus les première, deuxième et troisième zones de bord de contact sont en contact avec la voie ferrée.

3. Dispositif de détection selon l'une quelconque des revendications précédentes, dans lequel le dispositif de détection est configuré de manière à détecter des roues d'un véhicule ferroviaire passant sur le dispositif de détection, dans lequel, de préférence, le dispositif de détection comprend un capteur de champ magnétique destiné à détecter une influence du passage de la roue sur le champ magnétique.

4. Dispositif de détection selon l'une quelconque des revendications précédentes, dans lequel la première zone de bord de contact est adjacente à la face supérieure.

5. Dispositif de détection selon la revendication 4, dans lequel la face de montage comprend une partie de face positionnée au niveau d'une face latérale du logement et reliant la deuxième zone de bord de contact et la troisième zone de bord de contact, et une partie inclinée entre la face supérieure et la partie de face, dans lequel la première zone de bord de contact est une zone de bord entre la face supérieure et la partie inclinée, la deuxième zone de bord de contact est une zone de bord entre la partie de face et la partie inclinée et la troisième zone de bord de contact est une zone de bord entre la partie de face et la face de base.

6. Dispositif de détection selon l'une quelconque des revendications précédentes, dans lequel la voie ferrée, en section transversale, comprend une partie de base, une partie principale destinée à recevoir les roues des véhicules ferroviaires et une partie de col reliant la partie de base et la partie principale,
dans lequel les deuxième et troisième zones de bord de contact sont configurées de manière à être en contact avec la face latérale de la voie ferrée au niveau de sa partie de col et dans lequel la première zone de bord de contact est configurée de manière à être en contact avec la face latérale de la voie ferrée au niveau de sa partie principale.

7. Dispositif de détection selon la revendication 6, dans lequel la partie principale s'élargit à partir de la partie de col dans une direction opposée à la partie de base définissant ainsi une surface faisant face à la partie de base de la partie principale de manière adjacente à la partie de col, dans lequel le logement est configuré de telle sorte que la première zone de bord de contact est en contact avec la surface faisant face à la partie de base lorsque les deuxième et troisième zones de bord sont en contact avec la partie de col de la voie ferrée.

8. Dispositif de détection selon l'une quelconque des revendications précédentes, dans lequel une première distance entre la deuxième zone de bord de contact et le deuxième plan dans une direction normale au deuxième plan est comprise dans la plage de 3 à 40 mm, de préférence, de 4 à 20 mm.

9. Dispositif de détection selon l'une quelconque des revendications précédentes, dans lequel un quatrième plan s'étend à travers la première zone de bord de contact et est perpendiculaire au deuxième plan, dans lequel une seconde distance entre la deuxième zone de bord de contact et le quatrième plan dans une direction normale au quatrième plan est comprise dans la plage de 8 à 25 mm, de préférence, de 15 à 20 mm,

10. Dispositif de détection selon l'une quelconque des revendications précédentes, dans lequel les première, deuxième et troisième zones de bord de contact sont positionnées sensiblement le long d'une courbe suivant un profil de surface de section transversale de la voie ferrée, dans lequel, de préférence, la voie ferrée est une voie ferrée à fond plat, dans lequel, plus préférablement, la voie ferrée présente un profil de rail 54E1, un profil de rail 54E2 et/ou est fabriquée selon la norme européenne EN 13674-1 ou 13674-4.

11. Dispositif de détection selon l'une quelconque des revendications précédentes, dans lequel les première, deuxième et troisième zones de bord de contact s'étendent le long de la face de montage de telle sorte que, lorsque le dispositif est placé sur la voie ferrée, les première, deuxième et troisième zones de bord de contact s'étendent dans une direction longitudinale de la voie ferrée.

12. Procédé de mise en place d'un dispositif de détection selon l'une quelconque des revendications précédentes, sur une face latérale d'une voie ferrée, le procédé comprenant :
la mise en place du dispositif de détection, soit les première et deuxième zones de bord de contact soit les deuxième et troisième zones de bord de contact étant en contact avec la voie ferrée ;
le glissement du dispositif de détection dans une direction de glissement dans le but de placer la zone de bord de contact restante en contact avec la voie ferrée, dans lequel, au cours du glissement, respectivement les première et deuxième ou les deuxième et troisième zones de bord de contact restent en contact avec la face latérale de la voie ferrée.

13. Procédé selon la revendication 12, dans lequel le dispositif de détection est placé de telle sorte que les deuxième et troisième zones de bord de contact sont en contact avec la face latérale de la voie ferrée ; et
dans lequel le dispositif de détection est glissé dans une direction de glissement au moins partiellement le long d'une direction normale de la face supérieure du dispositif de détection dans le but de placer la première zone de bord de contact en contact avec la voie ferrée, dans lequel, au cours du glissement, les deuxième et troisième zones de bord de contact restent en contact avec la face latérale de la voie ferrée.

14. Procédé selon la revendication 12 ou 13, dans lequel la voie ferrée, en section transversale, comprend une partie de base, une partie principale destinée à recevoir les roues des véhicules ferroviaires et une partie de col reliant la partie de base et la partie principale, dans lequel les deuxième et troisième zones de bord de contact sont placées en contact avec une surface de la partie de col de la voie ferrée, dans lequel la direction de glissement est, de préférence, orientée vers la partie principale de telle sorte qu'après glissement, la première zone de bord de contact est placée en contact avec une surface faisant face à la partie de base de la partie principale.

15. Ensemble comprenant un dispositif de détection selon l'une quelconque des revendications 1 à 11 et au moins une voie ferrée.
